(19) Europäisches Patentamt European Patent Office Office européen des brevets

(11) **EP 4 509 903 A1**

(12) **EUROPEAN PATENT APPLICATION**

(43) Date of publication:
**19.02.2025 Bulletin 2025/08**

(21) Application number: **24194020.4**

(22) Date of filing: **12.08.2024**

(51) International Patent Classification (IPC):
***G02B 27/01*** *(2006.01)*

(52) Cooperative Patent Classification (CPC):
**G02B 27/0172**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 KR 20230106232**

(71) Applicant: **LX Semicon Co., Ltd.**
**Daejeon 34027 (KR)**

(72) Inventors:
• **LEE, Do Hoon**
  **34027 Daejeon (KR)**

• **YUK, Ji Hong**
  **34027 Daejeon (KR)**
• **JEON, Ho Hyub**
  **34027 Daejeon (KR)**
• **JEONG, Seok Hwa**
  **34027 Daejeon (KR)**
• **CHOI, Ji Hoon**
  **34027 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **APPARATUS FOR DISPLAYING IMAGE USING LENS AND METHOD FOR CONTROLLING THE SAME**

(57) Disclosed is a method of controlling a display device displaying an image using a lens, the method including storing a lens distortion parameter for chromatic aberration correction, receiving image data, primarily calculating a distance between a center point and a current pixel, secondarily calculating a distortion correction weight in consideration of the distance, and outputting image data of the current pixel through calculation according to the calculated distortion correction weight without using the stored lens distortion parameter intactly.

FIG. 1

(a)  (b)

EP 4 509 903 A1

**Description**

This application claims the benefit of Korean Patent Application No. 10-2023-0106232, filed on August 14, 2023, which is hereby incorporated by reference as fully set forth herein.

## BACKGROUND OF THE DISCLOSURE

### TECHNICALFIELD

The present disclosure is applicable to any technology for displaying an image using a lens, and is also applicable to various devices that provide VR virtual reality services. For example, it is applicable to Head Mounted Displays (HMDs), smart glasses, mobile phones, PCs, and the like. Yet, the present disclosure is applicable to components that are not final products.

### BACKGROUND

Various VR devices such as HMD and the like have recently appeared in the market. However, since a user wearing these devices checks image data through a lens, chromatic aberration occurs.

Chromatic aberration refers to a phenomenon in which light passing through a lens forms an image in a different place for each color because the refractive index of light varies depending on a wavelength.

As for the refractive characteristics of light, the shorter the wavelength becomes, the higher the refractive index gets. And, the longer the wavelength becomes, the lower the refractive index gets. When chromatic aberration occurs due to this phenomenon, there is a problem that color is mainly distorted in an outer part of an image.

To solve this problem, according to the related art, a lens distortion parameter of a fixed value for chromatic aberration correction was used.

However, if the degree of distortion varies depending on a distance from a center when performing simple distortion correction by matching the center, there is still a problem that a periphery of the center differs from an outer area in correction accuracy.

### SUMMARY

Accordingly, the present disclosure is directed to an apparatus for displaying an image using a lens and method for controlling the same that substantially obviate one or more problems due to limitations and disadvantages of the related art.

One object of the present disclosure is to provide a compensation algorithm for a distortion phenomenon caused by a lens distortion parameter in a device that provides an image to a user through a special lens.

For example, based on a center point of a lens distortion parameter, it is intended to compensate by reflecting a distortion parameter according to a distance between a position of a current pixel and a position of the center point.

To achieve these objects and other advantages and in accordance with the purpose of the disclosure, as embodied and broadly described herein, a method of controlling a display device displaying an image using a lens may include storing a lens distortion parameter for chromatic aberration correction, receiving image data, primarily calculating a distance between a center point and a current pixel, secondarily calculating a distortion correction weight in consideration of the distance, and outputting image data of the current pixel through calculation according to the calculated distortion correction weight without using the stored lens distortion parameter intactly.

The secondarily calculating may be designed to enable to distortion correction weight to increase as the distance increases.

A plurality of the distortion correction weights may be obtained by an interpolation technique or by using a Lookup Table (LUT). Furthermore, according to the structure of a lens attached to an HMD or the like, it is also a feature of the present disclosure that an LUT consuming the least power, interpolation and the like are selected.

When the current pixel corresponds to green, the primarily calculating and the secondarily calculating may be designed to be disabled.

The center point may correspond to a center point of a distortion parameter for red or a center point of a distortion parameter for blue.

The steps described above may be performed in a semiconductor for display driving.

In another aspect of the present disclosure, an apparatus for providing a Virtual Reality (VR) service according to one embodiment of the present disclosure may include a memory storing a lens distortion parameter for chromatic aberration correction and a controller.

The controller may receive image data, primarily calculate a distance between a center point and a current pixel, secondarily calculate a distortion correction weight in consideration of the distance, and output image data of the current pixel according to the calculated distortion correction weight.

Accordingly, the present disclosure provides the following effects and/or advantages.

According to one embodiment of the present disclosure, provided is a compensation algorithm for a distortion phenomenon caused by a lens distortion parameter in a device that provides an image to a user through a special lens.

For example, by compensating by reflecting a distortion parameter according to a distance between a position of a current pixel and a position of a center point based on the center point of a lens distortion parameter, there is a technical effect capable of more completely removing the chromatic aberration phenomenon.

In addition to the above-described technical effects, matters obvious to those skilled in the art in consideration of the entire specification are also included in the additional technical effects of the present disclosure.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

FIG. 1 is a diagram exemplarily illustrating various appearances of XR devices to which one embodiment of the present disclosure is applicable.

FIG. 2 is a perspective diagram of an HMD device illustrated in FIG. 1 viewed from various angles.

FIG. 3 is a block diagram illustrating internal main components included in the HMD device illustrated in FIG. 1.

FIG. 4 is a diagram exemplarily illustrating a silicon semiconductor substrate including a driving circuit included in the HMD device illustrated in FIG. 1.

FIG. 5 is a block diagram illustrating an apparatus for providing a Virtual Reality (VR) service according to one embodiment of the present disclosure.

FIG. 6 is a diagram showing a result from performing a distortion compensation algorithm of one embodiment of the present disclosure compared to the related art.

FIG. 7 is a diagram for describing bilinear interpolation applied to one embodiment of the present disclosure.

FIG. 8 is a diagram for describing a process of calculating a distortion correction weight differently in consideration of a distance between a center point and a current pixel according to one embodiment of the present disclosure.

FIG. 9 is a diagram showing a result from completely removing the chromatic aberration phenomenon according to one embodiment of the present disclosure compared to the related art.

FIG. 10 is a flowchart illustrating a method of providing a Virtual Reality (VR) service according to another embodiment of the present disclosure.

## DETAILED DESCRIPTION

Throughout the specification, like reference numerals are used to refer to substantially the same components. In the following description, detailed descriptions of components and features known in the art may be omitted if they are not relevant to the core configuration of the present disclosure. The meanings of terms used in this specification are to be understood as follows.

The advantages and features of the present disclosure, and methods of achieving them, will become apparent from the detailed description of the embodiments, together with the accompanying drawings. However, the present disclosure is not limited to the embodiments disclosed herein and will be implemented in many different forms. The embodiments are provided merely to make the disclosure of the present disclosure thorough and to fully inform one of those skilled in the art to which the present disclosure belongs of the scope of the disclosure. It is to be noted that the scope of the present disclosure is defined only by the claims.

The figures, dimensions, ratios, angles, numbers of elements given in the drawings are merely illustrative and are not limiting. Like reference numerals refer to like elements throughout the specification. Further, in describing the present disclosure, descriptions of well-known technologies may be omitted in order to avoid obscuring the gist of the present disclosure.

As used herein, the terms "includes," "has," "comprises," and the like should not be construed as being restricted to the means listed thereafter unless specifically stated otherwise. Where an indefinite or definite article is used when referring to a singular noun e.g. "a" or "an", "the", this includes a plural of that noun unless something else is specifically stated.

Elements are to be interpreted a margin of error, even if not explicitly stated otherwise.

In describing positional relationship, for example, if the positional relationship of two parts is described as 'on -', 'over -', 'under -', 'next to -', or the like, one or more other parts may be located between the two parts unless 'right' or 'direct' is used.

In describing temporal relationships, terms such as "after," "subsequent to," "next to," "before," and the like may include cases where any two events are not consecutive, unless the term "immediately" or "directly" is explicitly used.

While the terms first, second, and the like are used to describe various elements, the elements are not limited by these terms. These terms are used merely to distinguish one element from another. Accordingly, a first element referred to herein may be a second element within the technical idea of the present disclosure.

"X-axis direction", "Y-axis direction", and "Z-axis direction" should not be interpreted only as a geometrical relationship in which the relationship between each other is vertically formed, and may mean that the configuration of the present disclosure has a wider directionality within the range in which it may work functionally.

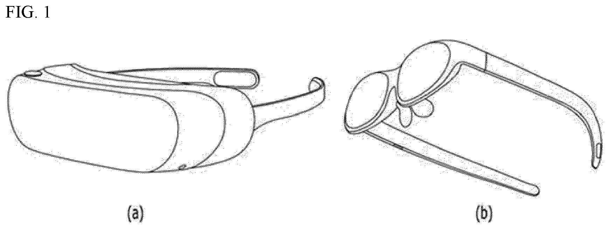

FIG. 1 is a diagram exemplarily illustrating various appearances of XR devices to which one embodiment of the present disclosure is applicable.

Virtual Reality (VR) refers to a technology that uses a virtual image that is not real, for example, an object (object), a background, and an environment. A representative product used in VR technology is a Head Mounted Display (HMD) device. When an HMD device is used on a head, there is a small display at a position close to both eyes, so a 3D image using parallax is projected. With a gyro sensor that tracks a user's movement and a rendering function of creating an image according to the movement, and the like, the user can experience as if he is in a 3D space. FIG. 1 (a) exemplarily shows the appearance of the HMD device.

Augmented Reality (AR) refers to a technology that displays a single image by superimposing a 3D virtual image on a real image or background, for example. A representative product used in AR technology is AR glasses. This is an electronic device in the form of glasses that implements AR content on a transparent lens. While a user wears it like regular glasses, a large screen screen-level display may be projected in front of eyes or various augmented reality contents may be used. It is able to experience the extended reality in which augmented reality contents are combined by utilizing all 360-degree spaces centering on the user. FIG. 1 (b) exemplarily shows the appearance of AR glasses.

Mixed Reality (MR) includes the meaning of Augmented Reality (AR) that adds virtual information based on reality and Augmented Virtuality (AV) that adds reality information to a virtual environment. In other words, by providing a smart environment in which reality and virtuality are naturally connected, users can have a rich experience.

Extended Reality (XR) refers to ultra-realistic technologies and services that cover Mixed Reality (MR) technologies that encompass Virtual Reality (VR) and Augmented Reality (AR).

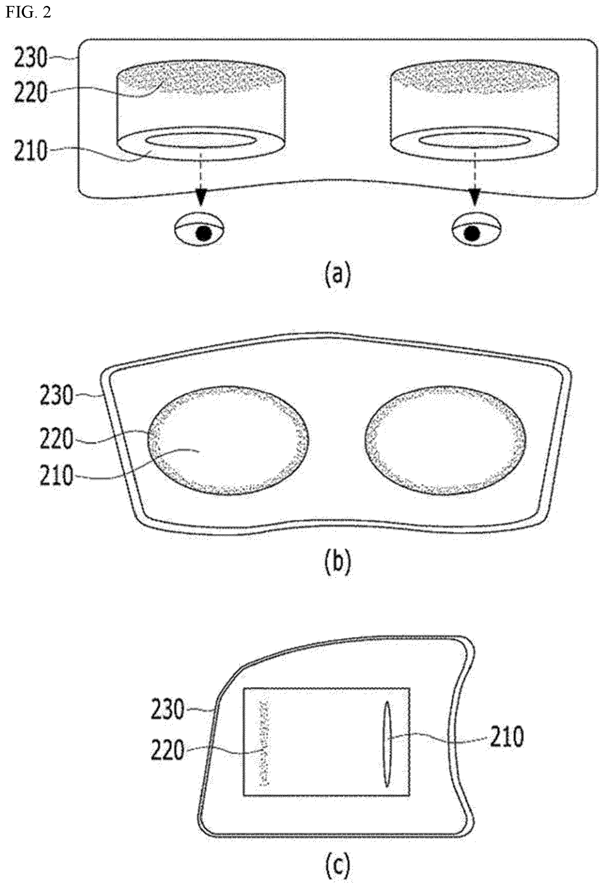

Hereinafter, in FIGs. 2 to 4, an HMD device to which VR technology is applied will be exemplarily described for convenience of explanation, but the present disclosure is applicable to any type of XR device.

FIG. 2 is a perspective diagram of the HMD device illustrated in FIG. 1, viewed from various angles.

FIG. 2 (a) is a perspective view of the HMD device according to one embodiment of the present disclosure viewed from above, and a reference number 210 means a lens, and there are two lenses for the left and right eyes, respectively.

A reference number 220 is a display, and it may be manufactured in the form of two displays to provide a left-eye image and a right-eye image, respectively, or it is also within the scope of the present disclosure to manufacture the display as a single display.

In addition, a reference number 230 refers to an HMD device (other types of VR devices also fall within the scope of the present disclosure).

FIG. 2 (b) is a perspective view of the HMD device according to one embodiment of the present disclosure when viewed from the front, and FIG. 2 (c) is a perspective view of the HMD device according to one embodiment of the present disclosure when viewed from the side.

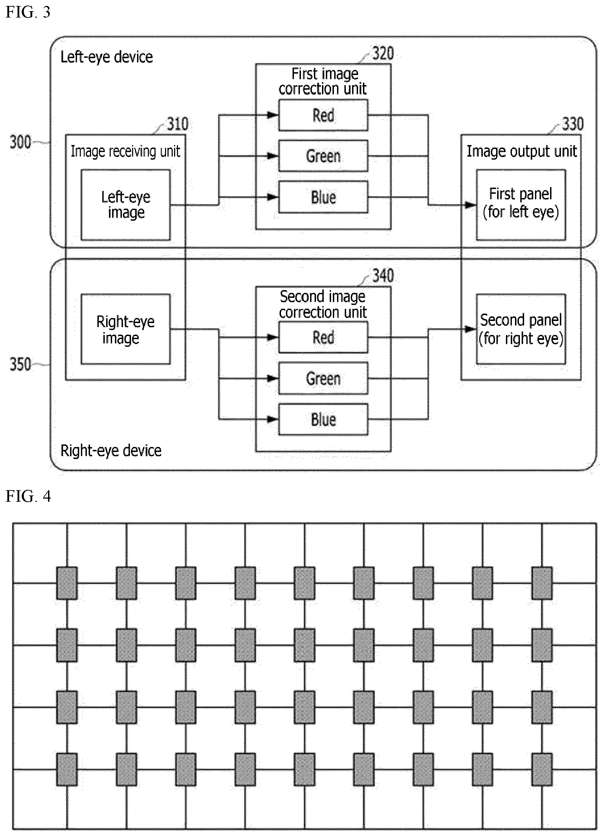

FIG. 3 is a block diagram illustrating internal main components included in the HMD device illustrated in FIG. 1.

As shown in FIG. 3, an image receiving unit 310 included in a left-eye device 300 and an image receiving unit 310 included in a right-eye device 350 receive a left-eye image and a right-eye image, respectively.

This is attributed to the human visual characteristics. Hence, it is designed to receive images suitable for the left and right eyes, respectively, because images recognized from both eyes can be combined and recognized as one image in the brain only when a viewpoint of an object looks different depending on the positions of the two eyes.

A first image correction unit 320 included in the left-eye device 300 and a second image correction unit 340 included in the right-eye device 350 independently process the received images for each of R, G, and B, and then transmit the processed images to left-eye and right-eye panels included in an image output unit 330, respectively.

In addition, the images sent to the left-eye device 300 and the right-eye device 350 are generated by an Application Processor (AP).

Meanwhile, in FIG. 3, it is divided into a receiving unit, a correction unit, and an output unit, but this form exists independently in the left-eye and right-eye devices. Of course, implementing them as one form also falls within the scope of the present disclosure.

In addition, FIG. 4 exemplarily shows a silicon semiconductor substrate including a driving circuit included in the HMD device illustrated in FIG. 1.

Unlike display panels in other products according to the related art, the HMD device (including other types of VR devices) according to one embodiment of the present disclosure is designed so that ae driving layer is put on a silicon semiconductor.

Furthermore, when an image is corrected, the resolution of a red pixel increases and the resolution of a blue pixel decreases. Therefore, before video data is outputted, data of the red pixel is designed to be partially removed and the blue pixel is designed to be filled with black and transmitted to the driving layer, whereby the video data is outputted.

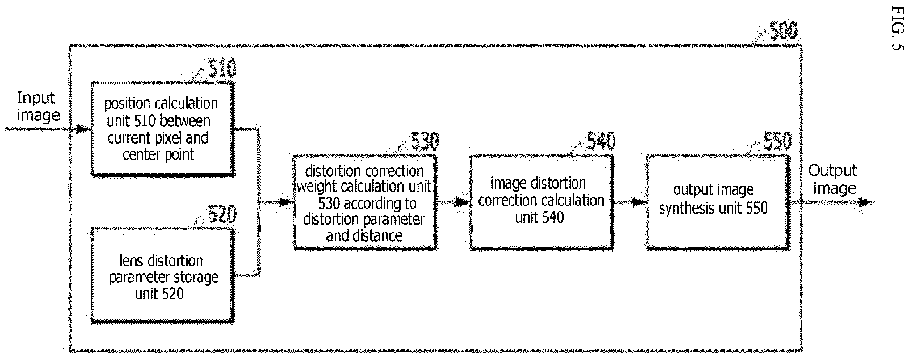

FIG. 5 is a block diagram of a device for providing a Virtual Reality (VR) service according to one embodiment of the present disclosure. Referring to the above-described embodiments described in FIGs. 1 to 4, the following FIG. 5 and the like may be supplemented and interpreted.

In particular, in the product to which the present disclosure is applied, since a user sees image data through the lens 210 and the like shown in FIG. 2, chromatic aberration occurs, and the present disclosure intends to solve such a chromatic aberration problem.

As described above, the present disclosure may provide a compensation algorithm for a distortion phenomenon caused by a lens distortion parameter in a device (e.g., a VR device such as an HMD, etc.) that provides an image to a user through a special lens. To implement this, it is designed to compensate by reflecting a distortion parameter depending on a distance between a position of a current pixel and a position of a center point based on the center point of the lens distortion parameter.

For example, as shown in FIG. 5, a device 500 providing a Virtual Reality (VR) service includes a position calculation unit 510 between a current pixel and a center point, a lens distortion parameter storage unit 520, a distortion correction weight calculation unit 530 according to a distortion parameter and a distance, an image distortion correction calculation unit 540, an output image synthesis unit 550, and the like.

Meanwhile, the position calculation unit 510 between the current pixel and the center point, the distortion correction weight calculation unit 530 according to the distortion parameter and distance, the image distortion correction calculation unit 540, and the output image synthesis unit 550 except the storage unit 520 are designed to be performed by one controller, processor, AP, etc., which also falls within the scope of the present disclosure.

On the other hand, a Display Driver IC (DDI) may be designed to operate the above-described reference numbers 510, 530, 540 and 550 instead of the AP, and such a design also has an additional effect of lowering power consumption to nearly 50% that is 50mW compared to about 100mW consumed by the AP.

The lens distortion parameter storage unit 520 stores a lens distortion parameter for chromatic aberration correction. The storage unit 520 may be implemented with various types of memories.

The position calculation unit 510 between the current pixel and the center point receives image data and primarily calculates the distance between the center point and the current pixel.

The distortion correction weight calculation unit 530 according to the distortion parameter and the distance is designed to secondarily calculate a distortion correction weight in consideration of the above-described distance.

Unlike the related art, the image distortion correction calculation unit 540 is designed to perform image distortion correction according to the calculated distortion correction weight without using the lens distortion parameter stored in the storage unit 520 as it is.

More specifically, the lens distortion parameter P stored in the storage unit 520 is multiplied by a correction weight W calculated in the calculation unit 540, and a pixel value of image data is multiplied by a result PW.

And, the output image synthesis unit 550 synthesizes and outputs the corrected image data.

Here, the corrected image data means, for example, a result obtained by multiplying the pixel value of an initially received image data by the PW described above.

Yet, while red and blue pixels are corrected, green pixels are designed not to be corrected, which is one feature of the present disclosure.

That is, according to one embodiment of the present disclosure, by using a distortion correction weight that changes according to a distance between a center point and a current pixel without using a lens distortion parameter stored in the memory as it is, there is a technical effect capable of solving the chromatic aberration problem that still remains in an outer portion of an image. Such a function may be performed by a controller such as an AP, etc.

In particular, the controller is designed to enable the distortion correction weight to increase as the distance between the center point and the current pixel increases, for example.

There is no particular limitation on the method of obtaining a plurality of distortion correction weights, which may be obtained, for example, by an interpolation technique or by using a LookUp Table LUT.

On the other hand, if the current pixel corresponds to green, the technical effect of minimizing unnecessary power consumption is additionally expected by designing only the modules 510 and 530 to be limitedly and temporarily disabled.

On the other hand, if the current pixel corresponds to red or blue, the modules 510 and 530 are designed to operate normally.

Therefore, the aforementioned center point corresponds to, for example, the center point of the distortion parameter for red or the center point of the distortion parameter for blue.

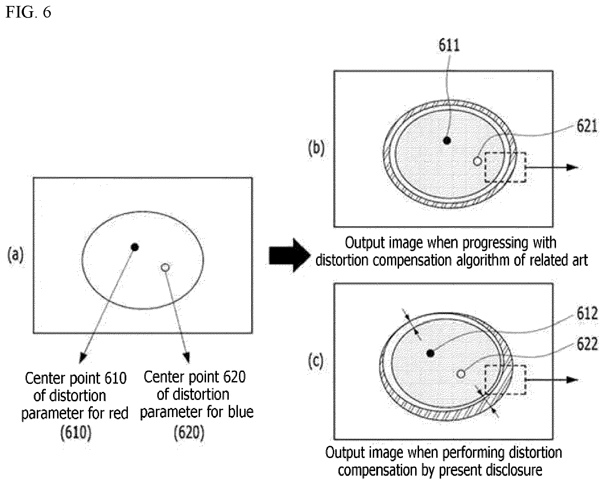

FIG. 6 shows a distortion compensation algorithm performance result of one embodiment of the present disclosure compared to the related art.

As described above, while green pixels are designed to be bypassed without compensation, compensation is designed to be performed on red and blue pixels only, which is also one of the features of the present disclosure.

As shown in FIG. 6 (a), a center point of a distortion parameter for red is a reference number 610, and a center point of a distortion parameter for blue corresponds to a reference number 620.

Yet, when a distortion compensation algorithm is applied according to the related art, as shown in FIG. 6 (b), since interpolation is performed collectively according to a scale ratio without considering the distance between a center point 611 and a current pixel 621, it frequently occurs that a chromatic aberration phenomenon still remains in an outer portion.

On the other hand, when a distortion compensation algorithm is applied according to one embodiment of the present disclosure, as shown in FIG. 6 (c), interpolation is performed according to a higher scale ratio as a distance between a center point 612 and a current pixels 622 increases more, so there is a technical effect of solving the chromatic aberration phenomenon in the outer portion.

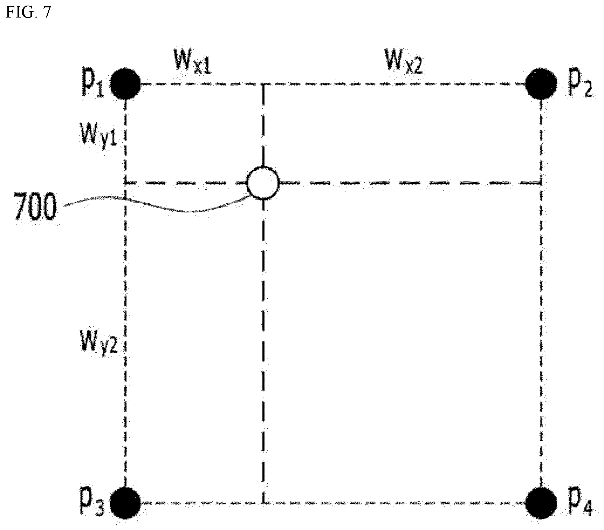

In this regard, bilinear interpolation may be modified and applied, which will be described in more detail below with reference to FIG. 7.

FIG. 7 is a diagram for explaining bilinear interpolation applied to one embodiment of the present disclosure.

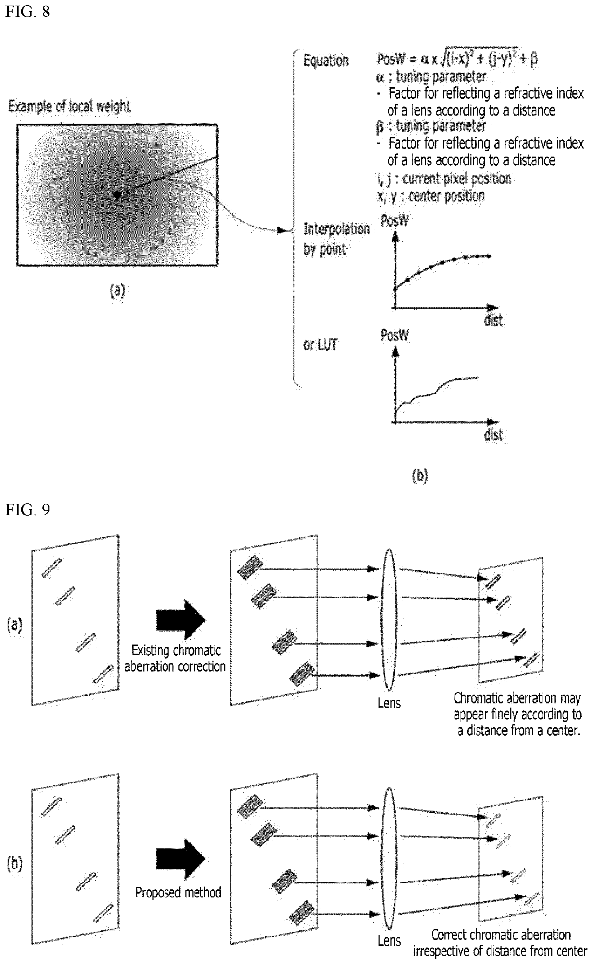

First, in order to implement one embodiment of the present disclosure, for example, the following equation may be used, and in particular, a weight PosW according to a position difference (distance difference) between a center point and a current pixel is additionally used. The weight PosW according to the position (or distance) difference will be described in more detail below with reference to FIG. 8.

-

$$o_{val} = (p_1 \times w_{x1} + p_2 \times w_{x2}) \times w_{y1} + (p_3 \times w_{x1} + p_4 \times w_{x2}) \times w_{y2}$$

» $j$ : current y position
» $i$ : current x position
»

$$cal_h = j \times \frac{h_{input}}{h_{output}} \times \boxed{PosW}$$

»

$$cal_w = i \times \frac{w_{input}}{w_{output}} \times \boxed{PosW}$$

» $x_1 = rounddown(cal_w)$
» $y_1 = rounddown(cal_h)$
»

$$x_2 = x_1 + 1$$

»

$$y_2 = y_1 + 1$$

» $p_1 = input(x_1, y_1)$
» $p_2 = input(x_2, y_1)$
» $p_3 = input(x_1, y_2)$
» $p_4 = input(x_2, y_2)$
»

$$w_{x1} = 1 - (cal_w - x_1)$$

»

$$w_{x2} = cal_w - x_1$$

»

$$w_{y1} = 1 - (cal_h - y_1)$$

»

$$w_{y2} = cal_h - y_1$$

Here, O_val, for example, is a pixel value of an output image, means a pixel value of an image after completion of interpolation, and corresponds to a reference number 700 shown in FIG. 7.

The p 1 to p4 are pixel values of an input image, and means pixel values referred to when interpolation is performed. In this description, since it is exemplarily bi-linear interpolation, it will be described as an example of calculation with pixel values of four points.

The w_x1 to w_y2 refer to weight values determined according to pixel positions in an output image compared to pixel positions in an input image.

cal_h: h is an abbreviation for "height", which refers to a position value for a y-direction of an output image with respect to j (current y position) according to a ratio of h_input (height of input image) and h_output (height of output image).

cal_w: w is an abbreviation for width, which means a position value for an x-direction of an output image with respect to i (current x position) according to a ratio of w_input (width of input image) and w output (width of output image).

An interpolation process will be described in detail as follows.

First, it will be assumed that scaling is performed from 100 X 80 to 160 X 100. In this case, when it is intended to calculate a pixel value for (50, 36) of an output image, if it is a process of finding pixel positions x1, x2, y1, and y2 to be referenced in an input image,

w_input : 100, h_input : 80, w_output : 160, h_output : 100, i : 50, j : 36
and,

$$cal\_h = 36 \text{ X } 80 / 100 = 28.8$$

$$cal\_w = 50 \text{ X } 100 / 160 = 31.25$$

x1 = 31, x2 = 32, y1 = 28, y2 = 29
p1 = pixel value at a position (31, 28) in the input image
p2 = pixel value at a position (32, 28) in the input image
p3 = pixel value at a position (31, 29) in the input image
p4 = pixel value at a position (32, 29) in the input image

$$w\_x1 = 1 - (31.25 - 31) = 0.75$$

$$w\_x2 = (31.25 - 31) = 0.25$$

$$w\_y1 = 1 - (28.8 - 28) = 0.2$$

$$w\_y2 = (28.8 - 28) = 0.8$$

→ w_x1~w_y2 are weights according to the 1's polynomial I function depending on a distance due to bi-linear interpolation.

A result calculated as o_val = (p1 X 0.75 + p2 X 0.25) X 0.2 + (p3 X 0.75 + p4 X 0.25) X 0.8 becomes a pixel value corresponding to a position (50, 36) of the output image.

Yet, when the present disclosure is applied, PosW is designed to be additionally calculated when calculating cal_h and cal_w, as follows.

$$cal_h = j \times \frac{h_{input}}{h_{output}} \times \boxed{PosW}$$

$$cal_w = i \times \frac{w_{input}}{w_{output}} \times \boxed{PosW}$$

FIG. 8 is a diagram illustrating a process of calculating a distortion correction weight differently in consideration of a distance between a center point and a current pixel according to one embodiment of the present disclosure.

As shown in FIG. 8 (a), a weight PosW is designed to increase as a distance to a center point increases.

An example of an equation for obtaining the weight PosW is illustrated at an upper end of FIG. 8 (b). As a position (i, j) of a current pixel moves away from a center point (x, y), the PosW (weight) gradually increases.

In addition, one embodiment in which a plurality of weights are interpolated for each point is possible and one embodiment in which a plurality of weights are stored in the form of a lookup table is also possible, which pertain to the scope of the present disclosure.

FIG. 9 shows the result of completely removing a chromatic aberration phenomenon according to one embodiment of the present disclosure compared to the related art.

As shown in FIG. 9 (a), after chromatic aberration correction is performed according to a related art algorithm, a chromatic aberration phenomenon still remains in an outer portion of image data having passed through a lens. As described above, the reason is that only a fixed distortion parameter is used.

On the other hand, as shown in FIG. 9 (b), after chromatic aberration correction is performed according to the algorithm of one embodiment of the present disclosure, a chromatic aberration phenomenon is experimentally hardly found in the outer portion of the image data that has passed through the lens. As described above, the reason is that a distortion correction weight is designed to increase according to a distance between a current pixel and a center point.

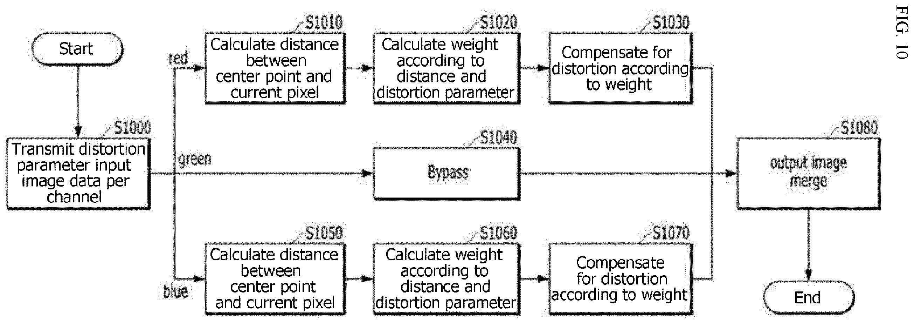

FIG. 10 is a flowchart illustrating a method of providing a Virtual Reality (VBR) service according to another embodiment of the present disclosure.

Distortion parameter input image data for each channel (e.g., R/G/B, etc.) is received (S1000). Yet, as described above, a green pixel is designed to be bypassed (S1040).

On the other hand, for a red pixel, it is designed to calculate a distance between a center point and a current pixel (S1010), calculate a weight according to a distance and a distortion parameter (S1020), and perform distortion compensation according to the calculated weight (S1030).

Meanwhile, for a blue pixel, it is designed to calculate a distance between a center point and a current pixel (S1050), calculate a weight according to a distance and a distortion parameter (S1060), and perform distortion compensation according to the calculated weight (S1070).

Then, it is designed to synthesize and output data of each compensated pixel (S1080).

In summary, from the perspective of a device that provides a Virtual Reality (VR) service, a lens distortion parameter for chromatic aberration correction is first stored.

After receiving image data, the device primarily calculates a distance between a center point and a current pixel, and secondarily calculates a distortion correction weight by considering the distance.

Unlike the related art, the device does not use lens distortion parameters stored in a memory and the like as they are, but outputs image data of the current pixel according to the calculated distortion correction weight.

In particular, the secondary calculation steps S 1020 and S 1060 are designed so that the distortion correction weight increases as the distance increases.

As shown in FIG. 8 (b), a plurality of distortion correction weights may be obtained by an interpolation technique or by using a lookup table.

Again, when the current pixel corresponds to green, the above-described steps S1010, S1020, S1030, S1050, S1060, S1070, and the like are designed to be disabled.

Therefore, the center point in the steps S 1010 and S 1050 corresponds to, for example, a center point of a distortion parameter for red or a center point of a distortion parameter for blue.

In addition, at least one of the steps shown in FIG. 10 may be designed to be performed in a Display Driver IC (DDI), for example.

Meanwhile, the present disclosure may also be applied to the Head Mounted Display (HMD) illustrated in FIG. 1 (a).

The HMD shown in FIG. 1 (a) externally includes a strap that can be fixed to a user's body, and internally includes a memory storing lens distortion parameters for chromatic aberration correction and a controller.

In particular, the controller receives image data, primarily calculates a distance between a center point and a current pixel, secondarily calculates a distortion correction weight by considering the distance, and outputs image data of the current pixel according to the calculated distortion correction weight.

It will be appreciated by those skilled in the art to which the present disclosure belongs that the disclosure described above may be practiced in other specific forms without altering its technical ideas or essential features.

For example, an image processing device according to the present disclosure may be implemented in the form of an IC for each component or a combination of two or more components, and the function of the image processing device may be implemented in the form of a program and installed on the IC. When the function of the image processing device according to the present disclosure is implemented as a program, the function of each component included in the image processing device may be implemented as a specific code, and codes for implementing a specific function may be implemented as one program or may be implemented by being divided into a plurality of programs.

It should therefore be understood that the embodiments described above are exemplary and non-limiting in all respects. The scope of the present disclosure is defined by the appended claims, rather than by the detailed description above, and should be construed to cover all modifications or variations derived from the meaning and scope of the appended claims and the equivalents thereof.

**Claims**

1. A method of controlling a display device displaying an image using a lens, the method comprising:

   storing a lens distortion parameter for chromatic aberration correction;
   receiving image data;
   primarily calculating a distance between a center point and a current pixel;
   secondarily calculating a distortion correction weight in consideration of the distance; and
   outputting image data of the current pixel through calculation according to the calculated distortion correction weight without using the stored lens distortion parameter intactly.

2. The method of claim 1, wherein the outputting the image data comprises multiplying the stored lens distortion parameter (P) by the distortion correction weight (W) and multiplying a pixel value of the received image data by a result (PW) of the multiplication.

3. The method of claim 1 or 2, wherein the secondarily calculating is designed to enable the distortion correction weight to increase as the distance increases.

4. The method of claim 3, wherein a plurality of the distortion correction weights are obtained by an interpolation technique or by using a Lookup Table (LUT).

5. The method of any one of the preceding claims, wherein based on the current pixel related to green, the primarily calculating and the secondarily calculating are designed to be disabled.

6. The method of claim 5, wherein the center point is related to a center point of a distortion parameter for red or a center point of a distortion parameter for blue.

7. The method of any one of the preceding claims, wherein the steps are performed in a semiconductor for display driving.

8. A display device displaying an image using a lens, the display device comprising:

9

a memory storing a lens distortion parameter for chromatic aberration correction; and
a controller configured to receive image data, primarily calculate a distance between a center point and a current pixel, secondarily calculate a distortion correction weight in consideration of the distance, and output image data of the current pixel through calculation according to the calculated distortion correction weight without using the stored lens distortion parameter intactly.

9. The display device of claim 8, wherein the controller multiplies the stored lens distortion parameter (P) by the distortion correction weight (W) and then multiplies a pixel value of the received image data by a result (PW) of the multiplication.

10. The display device of claim 8 or 9, wherein the controller is designed to enable the distortion correction weight to increase as the distance increases.

11. The display device of claim 10, wherein a plurality of the distortion correction weights are obtained by an interpolation technique or by using a lookup table.

12. The display device of any of of claims 8 to 11, wherein based on the current pixel related to green, the primarily calculating and the secondarily calculating are designed to be disabled.

13. The display device of claim 12, wherein the center point is related to a center point of a distortion parameter for red or a center point of a distortion parameter for blue.

14. The display device of any one of claims 8 to 13, wherein the controller is implemented in a Display Driver IC (DDI).

15. A Head Mounted Display (HMD), comprising:

a strap fixable to a user's body;
a memory storing a lens distortion parameter for chromatic aberration correction; and
a controller configured to receive image data, primarily calculate a distance between a center point and a current pixel, secondarily calculate a distortion correction weight in consideration of the distance, and output image data of the current pixel according to the calculated distortion correction weight.

FIG. 1

(a)

(b)

FIG. 2

(a)

(b)

(c)

FIG. 3

FIG. 4

FIG. 5

EP 4 509 903 A1

FIG. 6

(a)

Center point 610
of distortion
parameter for red
(610)

Center point 620
of distortion
parameter for blue
(620)

611

621

(b)

Output image when progressing with
distortion compensation algorithm of related art

612

622

(c)

Output image when performing distortion
compensation by present disclosure

FIG. 7

FIG. 8

Example of local weight

(a)

Equation   $PosW = \alpha \times \sqrt{(i-x)^2 + (j-y)^2} + \beta$

$\alpha$ : tuning parameter
- Factor for reflecting a refractive index
  of a lens according to a distance
$\beta$ : tuning parameter
- Factor for reflecting a refractive index
  of a lens according to a distance
i, j : current pixel position
x, y : center position

Interpolation
by point

or LUT

(b)

FIG. 9

(a)    Existing chromatic
       aberration correction

Lens    Chromatic aberration may
        appear finely according to
        a distance from a center.

(b)    Proposed method

Lens    Correct chromatic aberration
        irrespective of distance from center

FIG. 10

Europäisches
Patentamt

European
Patent Office

Office européen
des brevets

# EUROPEAN SEARCH REPORT

**Application Number**

EP 24 19 4020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/268751 A1 (LIN TZU-CHIEH [TW] ET AL) 20 September 2018 (2018-09-20)<br><br>* paragraphs [0003], [0016] - [0022], [0033] - [0041]; figures 1, 2, 4 * | 1-4, 6-11, 13-15 | INV.<br>G02B27/01 |
| X | WO 2022/163213 A1 (JAPAN DISPLAY INC [JP]) 4 August 2022 (2022-08-04)<br>* Equations 11-13;<br>paragraphs [0121] - [0142], [0156], [0163]; figures 1, 13, 14 *<br>& US 2023/368744 A1 (WATANABE YOSHIHIRO [JP]) 16 November 2023 (2023-11-16) | 1,5-8, 12-15 | |
| X | US 2023/022934 A1 (POHL DANIEL [DE]) 26 January 2023 (2023-01-26)<br>* paragraphs [0025] - [0031]; figures 1, 2A, 2B, 4 * | 1,8,15 | |
| A | US 10 460 426 B2 (ESIGHT CORP [CA]) 29 October 2019 (2019-10-29)<br>* the whole document * | 1-15 | |
| A | US 8 836 720 B2 (OYAMA KENJI [JP]; TSUJIMOTO TAKUYA [JP]; CANON KK [JP]) 16 September 2014 (2014-09-16)<br>* the whole document * | 1-15 | TECHNICAL FIELDS SEARCHED (IPC)<br><br>G02B |
| A | US 2008/291447 A1 (VAKRAT DUDI [IL] ET AL) 27 November 2008 (2008-11-27)<br>* the whole document * | 1-15 | |
| A | US 8 730 357 B2 (NISHIO KENICHI [JP]; KANG HYONGMYONG [JP] ET AL.) 20 May 2014 (2014-05-20)<br>* the whole document * | 1-15 | |

The present search report has been drawn up for all claims

| Place of search | Date of completion of the search | Examiner |
|---|---|---|
| Munich | 13 December 2024 | Maria, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 24 19 4020

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | | | Publication date | Patent family member(s) | | | Publication date |
|---|---|---|---|---|---|---|---|
| US 2018268751 | A1 | | 20-09-2018 | TW | 201835635 | A | 01-10-2018 |
| | | | | US | 2018268751 | A1 | 20-09-2018 |
| WO 2022163213 | A1 | | 04-08-2022 | JP | 7507260 | B2 | 27-06-2024 |
| | | | | JP | WO2022163213 | A1 | 04-08-2022 |
| | | | | US | 2023368744 | A1 | 16-11-2023 |
| | | | | WO | 2022163213 | A1 | 04-08-2022 |
| US 2023022934 | A1 | | 26-01-2023 | BR | 122019025283 | A2 | 22-08-2017 |
| | | | | CN | 106575433 | A | 19-04-2017 |
| | | | | CN | 111861898 | A | 30-10-2020 |
| | | | | EP | 3161784 | A1 | 03-05-2017 |
| | | | | EP | 3709259 | A1 | 16-09-2020 |
| | | | | JP | 6431551 | B2 | 28-11-2018 |
| | | | | JP | 2017524278 | A | 24-08-2017 |
| | | | | KR | 20160148613 | A | 26-12-2016 |
| | | | | SG | 10201913411X | A | 30-03-2020 |
| | | | | SG | 11201609367X | A | 29-12-2016 |
| | | | | US | 2015379697 | A1 | 31-12-2015 |
| | | | | US | 2020051219 | A1 | 13-02-2020 |
| | | | | US | 2023022934 | A1 | 26-01-2023 |
| | | | | US | 2024070829 | A1 | 29-02-2024 |
| | | | | WO | 2015199982 | A1 | 30-12-2015 |
| US 10460426 | B2 | | 29-10-2019 | AU | 2016250919 | A1 | 09-11-2017 |
| | | | | CA | 2983461 | A1 | 27-10-2016 |
| | | | | CA | 3109499 | A1 | 27-10-2016 |
| | | | | CA | 3109670 | A1 | 27-10-2016 |
| | | | | CN | 107850777 | A | 27-03-2018 |
| | | | | CN | 114063302 | A | 18-02-2022 |
| | | | | EP | 3286599 | A1 | 28-02-2018 |
| | | | | US | 2016314564 | A1 | 27-10-2016 |
| | | | | US | 2018053285 | A1 | 22-02-2018 |
| | | | | US | 2020160491 | A1 | 21-05-2020 |
| | | | | US | 2021125314 | A1 | 29-04-2021 |
| | | | | WO | 2016168913 | A1 | 27-10-2016 |
| US 8836720 | B2 | | 16-09-2014 | CN | 101726854 | A | 09-06-2010 |
| | | | | EP | 2177941 | A2 | 21-04-2010 |
| | | | | JP | 5341462 | B2 | 13-11-2013 |
| | | | | JP | 2010096864 | A | 30-04-2010 |
| | | | | US | 2010091027 | A1 | 15-04-2010 |
| | | | | US | 2014327604 | A1 | 06-11-2014 |
| US 2008291447 | A1 | | 27-11-2008 | US | 2008291447 | A1 | 27-11-2008 |
| | | | | US | 2012098996 | A1 | 26-04-2012 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 24 19 4020

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | | Publication date |
|---|---|---|---|---|
| US 8730357 B2 | 20-05-2014 | CN | 102316326 A | 11-01-2012 |
| | | EP | 2424248 A2 | 29-02-2012 |
| | | JP | 5505135 B2 | 28-05-2014 |
| | | JP | 2012015781 A | 19-01-2012 |
| | | US | 2012002113 A1 | 05-01-2012 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230106232